# DEMANDE DE BREVET EUROPEEN

(11) **EP 1 320 080 A1**
(43) Date de publication de la demande: **18.06.2003**
(21) Numéro de dépôt: 01204847.6
(22) Date de dépôt: 13.12.2001
(51) Int. Cl.: G07C 9/00, G07B 15/02, G06K 19/07, G06K 7/00

(54) **Système et procédé de détection du passage d'un individu ou d'un objet par une entrée-sortie à un espace délimité**

(71) Demandeur: EM Microelectronic-Marin SA, 2074 Marin (CH)
(72) Inventeur: Gyger, Thomas, 2316 Les Ponts-de-Martel (CH)
(74) Mandataire: Ravenel, Thierry Gérard Louis

(57) **Abrégé**

Il est décrit un système et un procédé de détection du passage d'individus ou d'objets par une entrée-sortie (4) à un espace délimité (2). La détection du sens de passage est effectuée sur la base de la réception, par une unité électronique portable (40) équipant l'individu ou l'objet, de premier et deuxième signaux électromagnétiques (a, b) émis dans respectivement des première et deuxième régions de communication (A, B) séparées spatialement l'une de l'autre et se recouvrant partiellement, ces première et deuxième régions traversant chacune une zone d'entrée-sortie (32) définie par l'entrée-sortie.

Les premier et deuxième signaux électromagnétiques sont émis sensiblement en phase à la même fréquence et comportent chacun une portion de message identique (100), l'un desdits premier et deuxième signaux électromagnétiques comprenant une portion de message additionnelle (150) identifiant la région de communication correspondante (A, B), l'émission de l'autre desdits premier et deuxième signaux électromagnétiques étant interrompue durant l'émission de la portion de message additionnelle.

## Description

L'invention concerne la détection d'individus ou d'objets équipés d'unités électroniques portables, ou tickets électroniques, comprenant notamment des moyens de réception de signaux électromagnétiques, ces individus ou objets étant susceptibles d'entrer ou sortir d'un espace délimité par l'intermédiaire d'au moins une entrée-sortie.

Le système comporte notamment un dispositif de détection associé à cet espace délimité et comprenant notamment des moyens d'émission de signaux électromagnétiques.

La présente invention concerne plus particulièrement un tel système de détection de passage dont les moyens d'émission du dispositif de détection associé à l'espace délimité sont agencés pour émettre des premier et deuxième signaux électromagnétiques dans respectivement des première et deuxième régions de communication séparées spatialement l'une de l'autre et se recouvrant partiellement, ces première et deuxième régions traversant chacune une zone d'entrée-sortie définie par l'entrée-sortie à l'espace délimité.

Un système de détection d'individus ou d'objets présentant les caractéristiques susmentionnées est notamment exposé dans la demande internationale WO 01/03057, également au nom du présent Déposant, qui est incorporée ici par référence. On pourra également se référer à la demande de brevet européen No. 00204758.8 du 29.12.2000 intitulée « Système de détection du passage d'un individu ou objet par une entrée-sortie à un espace délimité » également au nom du présent Déposant.

L'utilisation de deux champs électromagnétiques partiellement superposés permet avantageusement la détection du sens de passage, au travers de l'entrée-sortie, d'un individu ou d'un objet équipé d'une unité électronique portable. A cet effet, on prévoit des moyens de détection de sens de passage permettant de détecter le sens de passage d'un individu ou d'un objet en fonction de la réception, par l'unité électronique, des premier et deuxième signaux électromagnétiques émis respectivement dans les première et deuxième régions de communication.

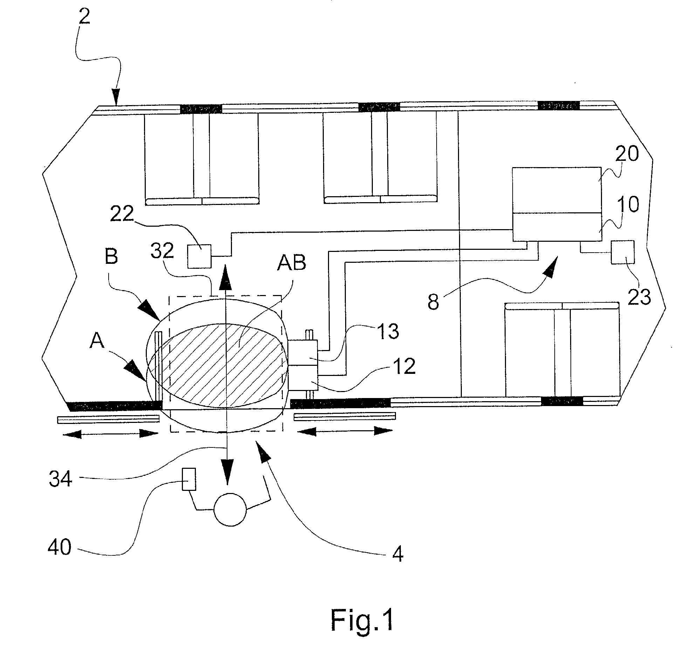

La figure 1 illustre schématiquement un exemple de mise en oeuvre d'un système de détection susmentionné. Des individus ou objets sont susceptibles d'entrer ou sortir d'un espace délimité 2 (par exemple un moyen de transport public tel qu'un wagon de voyageurs ou un autobus) au travers d'au moins une entrée-sortie, indiquée par la référence 4. Comme déjà mentionné, un dispositif de détection est associé à l'espace délimité 2 et comprend notamment des moyens d'émission 8. Ces moyens d'émission 8 comprennent un circuit électronique 10 relié à une paire d'antenne 12, 13 agencées à l'entrée-sortie 4, ce circuit électronique 10 étant lui-même raccordé à une unité centrale de traitement de données, ou ordinateur de bord 20. Les antennes 12, 13 émettent respectivement, préférablement à relativement basse fréquence (de l'ordre d'une centaine de kHz), un premier et un deuxième signal électromagnétique, désignés « a » et « b » dans la suite de la présente description, dans respectivement des première et deuxième régions de communication A, B représentées schématiquement dans la figure 1. Ces régions de communication A, B traversent une zone d'entrée-sortie 32 à l'espace délimité 2 définie par l'entrée-sortie 4. On notera que le dispositif de détection comprend par ailleurs des moyens d'émission-réception à relativement haute fréquence comprenant au moins une première antenne d'émission-réception 22, 23 connectée au circuit 10.

Les régions de communication A et B sont au moins partiellement séparées l'une de l'autre et possèdent une zone commune ou zone de recouvrement indiquée par la zone hachurée AB. En pratique, cette zone de recouvrement AB peut être importante en terme de surface et, en particulier, être plus importante que les parties non superposées des deux régions de communication A, B. Lorsqu'un individu ou un objet équipé d'une unité électronique portable, désignée 40 dans la figure 1, traverse l'entrée-sortie 4, comme illustré schématiquement par la flèche 34, ou passe dans la zone 32, celui-ci pénètre ainsi successivement dans l'une et/ou l'autre des régions de communication A, B. L'unité électronique portable 40 dont est équipé chaque individu ou objet capte ainsi une succession des premier et deuxième signaux électromagnétiques « a », « b » émis par les antennes 12, 13. L'ordre et la succession des signaux électromagnétiques reçus par l'unité électronique portable 40 permet d'identifier le sens de passage de l'individu ou de l'objet au travers de l'entrée-sortie 4.

La robustesse de cette détection de sens de passage est fortement tributaire de l'étendue de la zone de recouvrement AB entre les deux régions de communication A, B. A l'intérieur de cette zone de recouvrement AB, l'unité électronique 40 reçoit à la fois le premier signal électromagnétique « a» et le deuxième signal électromagnétique « b » émis respectivement par les antennes 12 et 13. La détermination du sens de passage de l'unité électronique 40 dans la zone de recouvrement AB ne peut donc être réalisée en se basant uniquement sur l'identification des signaux électromagnétiques reçus. Compte tenu de l'agencement spatial réel des régions de communication A, B et/ou de la vitesse de déplacement de l'unité électronique 40 au travers de l'entrée-sortie 4, il existe une relativement grande probabilité que l'unité électronique portable se trouve directement ou trop rapidement dans la zone de recouvrement AB, de sorte que le sens de passage effectif de l'unité électronique portable 40 peut ne pas être détecté correctement.

Un but de la présente invention est donc d'améliorer la robustesse de la détection du sens de passage du système susmentionné et en particulier permettre une détection fiable de ce sens de passage, quand bien même l'unité électronique portable pénètre rapidement dans la zone de recouvrement des deux régions de communication.

On notera que la demande de brevet européen No. 01200876.9 déposée le 08.03.2001, intitulée « Système de détection du passage d'individus ou d'objets par une entrée-sortie à un espace délimité », également au nom du présent Déposant, répond au but susmentionné en équipant chaque unité électronique portable (i) de moyens de mesure d'amplitude permettant de déterminer l'amplitude de réception, par cette unité électronique portable, des premier et deuxième signaux électromagnétiques, et (ii) de moyens comparateurs permettant de comparer l'amplitude de réception du premier signal électromagnétique avec l'amplitude de réception du deuxième signal électromagnétique de manière à déterminer lequel de ces deux signaux présente la plus grande amplitude.

On comprendra que cette solution nécessite l'utilisation de moyens additionnels qui ont pour inconvénient essentiel une augmentation de la complexité et des coûts de chaque unité électronique portable, complexité et coûts qu'il est préférable de maintenir aussi bas que possible. Un but additionnel de la présente invention est de proposer une solution permettant d'assurer cet objectif.

La présente invention a ainsi pour objet un système de détection du sens de passage d'un individu ou d'un objet dont les caractéristiques sont énoncées dans la revendication indépendante 1.

La présente invention concerne également un procédé de détection de sens de passage d'un individu ou d'un objet dont les caractéristiques sont énoncées dans la revendication indépendante 7.

Des modes de réalisations avantageux de la présente invention font l'objet des revendications dépendantes.

Selon l'invention, les premier et deuxième signaux électromagnétiques d'entrée sont émis sensiblement en phase à la même fréquence et comportent chacun une portion de message identique. L'un ou l'autre de ces premier et deuxième signaux électromagnétiques comprend une portion de message additionnelle identifiant la région de communication correspondante, l'émission de l'autre des premier et deuxième signaux électromagnétiques étant interrompue durant l'émission de cette portion de message additionnelle. De la sorte, la zone de recouvrement AB illustrée dans la figure 1 est « attribuée » intégralement à la première région de communication ou à la deuxième région de communication selon que la portion de message additionnelle est transmise au moyen du premier ou du deuxième signal électromagnétique.

Un avantage de la présente invention réside dans sa grande simplicité d'implémentation. En effet, la solution selon la présente invention ne nécessite aucune modification substantielle de la construction de l'unité électronique portable.

Un autre avantage de la présente invention réside dans le fait qu'elle permet la transmission d'une densité plus importante d'informations, à fréquence comparable, que les solutions envisagées jusqu'alors. En effet, les solutions antérieures qui consistaient à émettre les premier et deuxième signaux électromagnétiques en alternance ou à des fréquences différentes impliquent typiquement la transmission, pour chacun des premier et deuxième signaux électromagnétiques, d'un en-tête destiné notamment à permettre la synchronisation de l'unité électronique portable sur ces signaux en vue de leur décodage. Selon l'invention, la transmission en phase et à la même fréquence des premier et deuxième signaux électromagnétiques conduit à un gain en terme de temps de transmission équivalent à la durée de transmission d'un en-tête.

D'autres caractéristiques et avantages de la présente invention apparaîtront plus clairement à la lecture de la description détaillée qui suit, faite en référence aux dessins annexés donnés à titre d'exemples non limitatifs et dans lesquels :
- la figure 1, déjà présentée, est une illustration schématique d'un système de détection de sens de passage faisant l'objet de la présente invention ;
- la figure 2 montre schématiquement un mode de réalisation d'une unité électronique portable du système de la figure 1 ;
- la figure 3 illustre l'allure des premier et deuxième signaux électromagnétiques ainsi que leur mode d'émission selon un mode de réalisation non limitatif de la présente invention ; et
- la figure 4 illustre schématiquement l'attribution de la zone de recouvrement des régions de communication résultant du mode de réalisation de la figure 3.

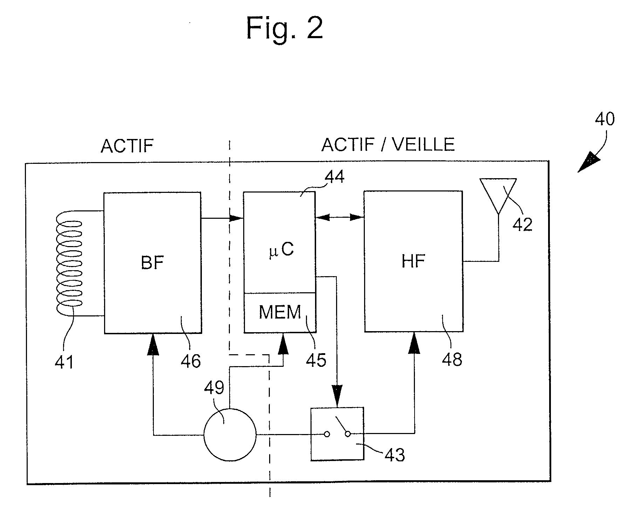

La figure 2 montre schématiquement un mode de réalisation non limitatif d'une unité portable 40 du système de détection de la figure 1. Cette unité électronique portable comporte un bloc de réception basse fréquence 46 et une antenne 41 pour recevoir les données transmises au moyen du ou des premiers signaux électromagnétiques basse fréquence « a », « b » émis par les moyens d'émission 8, 12, 13 du système, ainsi qu'un bloc d'émission-réception haute-fréquence 48 et une antenne 42 pour échanger des données avec des moyens d'émission-réception haute fréquence (22, 23 dans la figure 1) associés à l'espace délimité 10 au moyen d'un signal électromagnétique haute fréquence (par exemple de l'ordre d'une centaine de MHz ou plus). Ce signal électromagnétique haute fréquence sert notamment à la transmission d'informations relatives au sens de passage de l'unité électronique portable 40 au travers de l'entrée-sortie 4.

Une unité de traitement de données 44 (tel un micro-contrôleur ou microprocesseur) associée à une mémoire 45 est connectée aux blocs de réception basse fréquence 46 et d'émission-réception haute fréquence 48. L'unité électronique portable 40 est par ailleurs alimentée par une source d'alimentation en énergie électrique 49 telle une pile ou autre batterie. Préférablement, l'unité de traitement de données 44 peut être mise en mode de veille afin d'économiser de l'énergie. De même, le bloc d'émission-réception haute fréquence 48 est susceptible d'être désactivé ou mis en mode de veille par l'unité de traitement de données 44 comme schématisé par le moyen d'interruption 43. Ainsi, seul le bloc de réception basse fréquence 46 est alimenté en permanence ou quasi-permanence, celui-ci activant l'unité de traitement de données 44 dès lors qu'un signal électromagnétique basse fréquence (« a » ou « b ») émis par les moyens d'émission 8, 10, 12, 13 est reçu par ce bloc de réception 46.

On ne s'attardera pas plus longuement sur la description de la structure de l'unité électronique portable et du système de détection. On pourra à ce titre se référer amplement à la demande internationale WO 01/03057 et à la demande de brevet européen No. 00204758.8 du 29.12.2000 déjà citées en préambule.

On notera encore que la détermination du sens de passage est opérée en identifiant au moins lequel des premier et deuxième signaux électromagnétiques « a », « b » a été reçu en premier et en dernier. On comprendra par ailleurs que la détection du sens de passage de l'unité électronique portable 40 au travers de l'entrée-sortie peut être réalisée entièrement par l'unité électronique portable, auquel cas l'unité de traitement de données 44 de l'unité électronique portable 40 remplit la fonction des moyens de détection de sens de passage et détermine l'information de sens de passage. Cette information de sens de passage est ensuite transmise au dispositif de détection associé à l'espace délimité 2, typiquement au moyen d'un signal haute fréquence comme déjà mentionné plus haut. Cette transmission peut être effectuée directement après ou au terme d'un intervalle de temps déterminé faisant suite à la sortie de l'unité électronique portable de la première ou deuxième région de communication.

Alternativement, l'unité électronique portable peut se contenter de transmettre uniquement une indication identifiant au moins lequel des premier et deuxième signaux électromagnétiques « a », « b » a été reçu en premier et en dernier, le traitement de ces données en vue de la détermination du sens de passage étant effectué par le dispositif de détection associé à l'espace délimité.

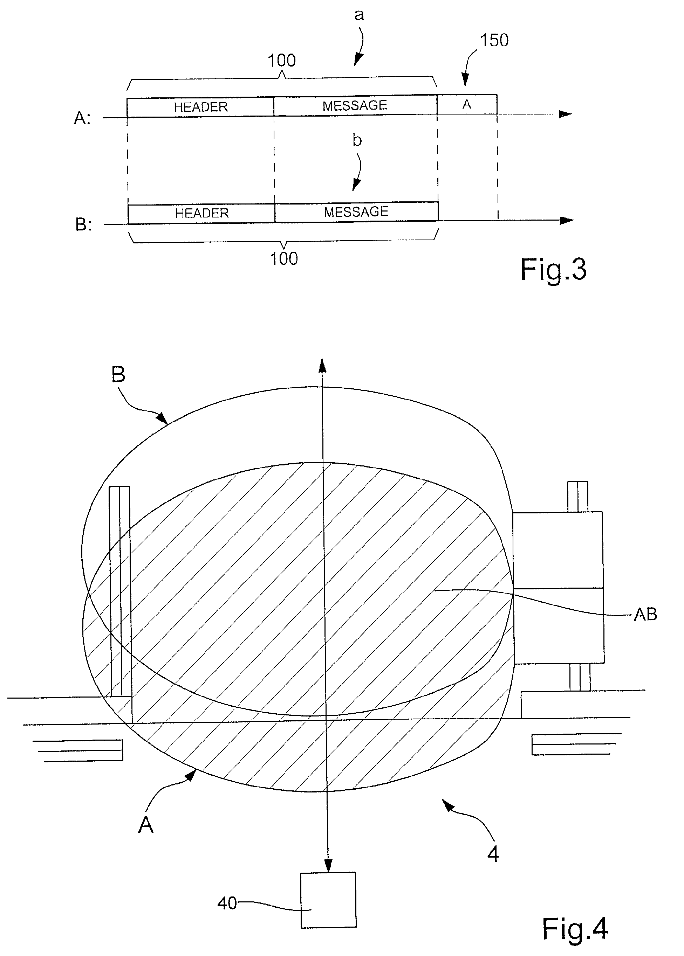

En référence à la figure 3, on va maintenant décrire l'allure des premier et deuxième signaux électromagnétiques ainsi que leur mode d'émission selon un mode de réalisation non limitatif de la présente invention. Ainsi, selon l'invention, les premier et deuxième signaux électromagnétiques « a », « b » sont émis en phase à la même fréquence et comportent chacun une portion de message identique, désignée 100 dans la figure 3. Cette portion de message 100 comporte, d'une part, un en-tête (« HEADER ») destiné notamment à permettre la synchronisation de l'unité électronique portable. La portion de message 100 comporte, d'autre part, un corps de message (« MESSAGE ») contenant notamment des indications concernant la date et l'heure de passage par l'entrée à l'espace délimité où le signal est émis, l'identité de l'espace délimité considéré (par exemple une identification du véhicule, du wagon de chemin de fer ou encore de la rame de métro, etc.), ainsi que d'autres indications complémentaires telle l'identité de la station ou de l'arrêt auquel est stationné le véhicule de transport ou encore des paramètres de configuration de l'unité électronique portable.

Selon l'invention, l'un des premier et deuxième signaux électromagnétiques comprend une portion de message additionnelle identifiant l'une des régions de communication A, B, l'émission de l'autre des premier et deuxième signaux électromagnétiques étant interrompue durant l'émission de cette portion de message additionnelle. Dans l'exemple de la figure 3, le premier signal électromagnétique « a » comporte ainsi une portion de message additionnelle, repérée par la référence numérique 150, identifiant la première région de communication A. L'émission du deuxième signal électromagnétique « b » est interrompue durant l'émission de cette portion de message additionnelle 150.

Etant donné que les portions de message 100 des premier et deuxième signaux électromagnétiques « a », « b » sont identiques et que seul le premier signal électromagnétique « a » (ou alternativement le deuxième signal électromagnétique « b ») comprend la portion de message additionnelle 150, on comprendra aisément qu'il n'en résulte aucune interférence entre les deux signaux électromagnétiques « a » et « b ».

Comme illustré schématiquement à la figure 4, la solution spécifique de la figure 3 a pour résultat « l'attribution » de la zone de recouvrement AB des deux régions de communications A et B à la région de communication A, située vers l'extérieur de l'espace délimité 2. Une unité électronique portable 40 se trouvant dans la région de communication A, y compris dans la zone de recouvrement AB, reçoit ainsi un message comprenant à la fois la portion de message 100 et la portion de message additionnelle 150 identifiant la région de communication A. L'unité électronique portable 40 traite alors cette information comme indiquant qu'elle se trouve dans la région de communication A. Dès lors que l'unité électronique portable 40 se trouve dans la région de communication B, en dehors de la zone de recouvrement AB, la portion de message additionnelle 150 n'est plus reçue par cette unité électronique portable 40. En conséquence, l'unité électronique portable 40 traite cette information comme indiquant qu'elle se trouve dans la région de communication B.

En pratique, il sera judicieux d'agencer et disposer les antennes d'émission des signaux électromagnétiques basse fréquence de sorte que l'on maximise et optimise la réception de chaque signal électromagnétique. Dans le cas d'espèce, il conviendra ainsi de maximiser et optimiser l'étendue de la région de communication B, en dehors de la zone de recouvrement AB, ceci de manière à assurer qu'une unité électronique portable traversant l'entrée-sortie reçoive au moins une fois le signal électromagnétique émis dans la région de communication B. Cette optimisation dépend notamment de la fréquence d'émission des signaux électromagnétiques « a », « b », de la durée des messages transmis, ainsi que de la vitesse de passage de l'unité électronique portable au travers de l'entrée.

On comprendra bien évidemment que l'on pourra choisir d'attribuer la zone de recouvrement AB à la région de communication B au lieu de la région de communication A comme illustré en référence aux figures 3 et 4. Cette attribution pourrait même changer au cours du temps si cela s'avère nécessaire. A titre d'exemple, dans la demande de brevet européen No. 00204758.8 du 29.12.2000 déjà citée en préambule, il est prévu de modifier les signaux électromagnétiques d'entrée après fermeture de l'entrée-sortie, et en particulier modifier le premier signal électromagnétique « a » émis dans la région de communication A située vers l'extérieur de l'espace délimité 2 pour devenir identique au deuxième signal électromagnétique « b ». Dans le cas d'espèce, ceci reviendrait à interrompre l'émission de la portion de message additionnelle 150 après la fermeture de l'entrée-sortie.

On comprendra finalement que diverses modifications et/ou améliorations évidentes pour l'homme du métier peuvent être apportées aux modes de réalisation décrits dans la présente description sans sortir du cadre de l'invention défini par les revendications annexées. On comprendra aisément que la portion de message additionnelle 150 permettant d'attribuer la zone de recouvrement AB à l'une ou l'autre des régions de communication A, B pourrait alternativement être transmise, non au terme du signal électromagnétique comme illustré dans la figure 3, mais à n'importe quel autre instant. La portion de message 100 pourrait ainsi être interrompue pour permettre la transmission de la portion de message additionnelle 150, l'émission de l'autre signal électromagnétique étant bien évidemment toujours interrompue durant cette période.

## Revendications

1. Système de détection du passage d'un individu ou d'un objet par une entrée-sortie (4) à un espace délimité (2) comprenant :
- un dispositif de détection (10, 12, 13, 20, 22, 23) associé au dit espace délimité (2) et comprenant des moyens d'émission (8) pour émettre des premier et deuxième signaux électromagnétiques (a, b) dans respectivement des première et deuxième régions de communication (A, B) séparées spatialement l'une de l'autre et se recouvrant partiellement, ces première et deuxième régions (A, B) traversant chacune une zone d'entrée-sortie (32) définie par ladite entrée-sortie (4) ;
- une unité électronique portable (40) destinée à équiper ledit individu ou objet et comprenant des moyens de réception (41, 46) desdits premier et deuxième signaux électromagnétiques (a, b) émis par lesdits moyens d'émission (8) ; et
- des moyens de détection du sens de passage, au travers de ladite entrée-sortie (4), d'un individu ou d'un objet équipé d'une unité électronique portable (40) en fonction de la réception desdits premier et deuxième signaux électromagnétiques (a, b),
**caractérisé en ce que** lesdits premier et deuxième signaux électromagnétiques (a, b) sont émis sensiblement en phase à la même fréquence et comportent chacun une portion de message identique (100), l'un (a ; b) desdits premier et deuxième signaux électromagnétiques comprenant une portion de message additionnelle (150) identifiant la région de communication correspondante (A, B), l'émission de l'autre (b ; a) desdits premier et deuxième signaux électromagnétiques étant interrompue durant l'émission de ladite portion de message additionnelle (150).

2. Système de détection selon la revendication 1, **caractérisé en ce que** lesdites première et deuxième régions de communication (A, B) sont respectivement agencées vers l'extérieur et vers l'intérieur dudit espace délimité (2) et **en ce que** ledit premier signal électromagnétique (a) comporte ladite portion de message additionnelle (150) identifiant la première région de communication (A).

3. Système de détection selon la revendication 1, **caractérisé en ce que** lesdites première et deuxième régions de communication (A, B) sont respectivement agencées vers l'extérieur et vers l'intérieur dudit espace délimité (2) et **en ce que** ledit deuxième signal électromagnétique (b) comporte ladite portion de message additionnelle (150) identifiant la deuxième région de communication (B).

4. Système de détection selon l'une quelconque des revendications 1 à 3, **caractérisé en ce que** lesdits moyens de détection de sens de passage comportent des moyens de traitement (20) desdits premier et deuxième signaux électromagnétiques (a, b) agencés dans ledit dispositif de détection associé à l'espace délimité.

5. Système de détection selon l'une quelconque des revendications 1 à 3, **caractérisé en ce que** lesdits moyens de détection de sens de passage comportent des moyens de traitement (44) desdits premier et deuxième signaux électromagnétiques (a, b) agencés dans ladite unité électronique portable (40).

6. Système de détection selon la revendication 2, **caractérisé en ce que** l'émission de ladite portion de message additionnelle (150) est interrompue après une fermeture de ladite entrée-sortie (4).

7. Procédé de détection du passage d'un individu ou d'un objet par une entrée-sortie (4) à un espace délimité (2) comprenant :
- l'émission de premier et deuxième signaux électromagnétiques (a, b) dans respectivement des première et deuxième régions de communication (A, B) séparées spatialement l'une de l'autre et se recouvrant partiellement, ces première et deuxième régions (A, B) traversant chacune une zone d'entrée-sortie (32) définie par ladite entrée-sortie (4) ;
- la réception, par une unité électronique portable (40) équipant ledit individu ou objet, du premier signal électromagnétique (a) et/ou du deuxième signal électromagnétique (b) ; et
- la détection du sens de passage, au travers de ladite entrée-sortie (4), dudit individu ou objet équipé de l'unité électronique portable (40) en fonction de la réception desdits premier et deuxième signaux électromagnétiques (a, b),
ce procédé étant **caractérisé en ce que** lesdits premier et deuxième signaux électromagnétiques (a, b) sont émis sensiblement en phase à la même fréquence et comportent chacun une portion de message identique (100), l'un (a ; b) desdits premier et deuxième signaux électromagnétiques comprenant une portion de message additionnelle (150) identifiant la région de communication correspondante (A, B), l'émission de l'autre (b ; a) desdits premier et deuxième signaux électromagnétiques étant interrompue durant l'émission de ladite portion de message additionnelle (150).

8. Procédé de détection selon la revendication 7, **caractérisé en ce que** ladite détection du sens de passage au travers de l'entrée-sortie (4) comprend la détermination de la région de communication correspondante (A ; B) en fonction de la réception de ladite portion de message additionnelle (150).

9. Procédé de détection selon la revendication 8, **caractérisé en ce que** ladite détection du sens de passage au travers de l'entrée-sortie (4) comprend la transmission, de ladite unité électronique portable (40) vers un dispositif de détection (10, 20) associé au dit espace délimité (2), d'une information comprenant au moins une identification de la région de communication correspondant au premier des signaux électromagnétiques reçus et de la région de communication correspondant au dernier des signaux électromagnétiques reçus.

10. Procédé de détection selon la revendication 8, **caractérisé en ce que** ladite détection du sens de passage au travers de l'entrée-sortie (4) comprend la transmission, de ladite unité électronique portable (40) vers un dispositif de détection (10, 20) associé au dit espace délimité (2), d'une information de sens de passage, cette information de sens de passage étant déterminée par ladite unité électronique portable au moins sur la base d'une identification de la région de communication correspondant au premier des signaux électromagnétiques reçus et de la région de communication correspondant au dernier des signaux électromagnétiques reçus.

11. Procédé selon la revendication 9 ou 10, **caractérisé en ce que** ladite transmission d'information, de l'unité électronique portable (40) vers ledit dispositif de détection associé à l'espace délimité (10, 20), est effectuée directement après ou au terme d'un intervalle de temps déterminé faisant suite à la sortie de l'unité électronique portable de ladite première ou deuxième région de communication.

12. Procédé selon l'une quelconque des revendications 9 à 11, **caractérisé en ce que** ladite transmission d'information, de l'unité électronique portable (40) vers ledit dispositif de détection (10, 20) associé à l'espace délimité, est effectuée à une fréquence relativement haute, supérieure à la fréquence d'émission desdits premier et deuxième signaux électromagnétiques.

13. Procédé de détection selon l'une quelconque des revendications 7 à 12, **caractérisé en ce que** lesdites première et deuxième régions de communication (A, B) sont respectivement agencées vers l'extérieur et vers l'intérieur dudit espace délimité (2) et **en ce que** ledit premier signal électromagnétique (a) comporte ladite portion de message additionnelle (150) identifiant la première région de communication (A), l'émission de ladite portion de message additionnelle (150) étant interrompue après une fermeture de ladite entrée-sortie (4).
